# EUROPÄISCHE PATENTSCHRIFT

(11) **EP 2 536 631 B1**
(45) Veröffentlichungstag und Bekanntmachung des Hinweises auf die Patenterteilung: **31.08.2016**
(21) Anmeldenummer: 11708697.5
(22) Anmeldetag: 16.02.2011
(51) Int. Cl.: B64D 11/06

(54) **FLUGZEUGSITZVORRICHTUNG MIT EINER ELEKTRONIKEINHEIT**
AIRCRAFT SEAT ASSEMBLY WITH AN ELECTRONIC UNIT
DISPOSITIF SIÈGE D'AVION AVEC UNE UNITÉ ÉLECTRONIQUE

(30) Priorität: 18.02.2010 DE 102010008460
(43) Veröffentlichungstag der Anmeldung: 26.12.2012
(73) Patentinhaber: Recaro Aircraft Seating GmbH & Co. KG, 74523 Schwäbisch Hall (DE)
(72) Erfinder: KRÄMER, Marco, 74549 Weipertshausen (DE)
(74) Vertreter: Daub, Thomas
(86) Internationale Anmeldenummer: PCT/EP2011/000743
(87) Internationale Veröffentlichungsnummer: WO 2011/101134

(56) Entgegenhaltungen:
- EP-A2- 1 795 444
- WO-A1-94/20327
- WO-A1-2010/086168
- DE-A1-102006 049 000
- US-A1- 2004 212 228
- US-A1- 2005 040 289
- US-B1- 6 179 381

## Beschreibung

### Stand der Technik

Es sind bereits Flugzeugsitzvorrichtungen mit einer Elektronikeinheit und einer Sitzgestelleinheit bekannt. Die Elektronikeinheit ist dabei auf einer Unterseite eines Sitzbodens befestigt, der über die Sitzgestelleinheit auf einem Flugzeugboden abgestützt ist.

Aus dem Dokument US 2004/0212228 A1 ist eine Flugzeugsitzvorrichtung bekannt, wobei eine Elektronikeinheit innerhalb eines Sitztragbalkens angeordnet ist.

### Vorteile der Erfindung

Es wird eine Flugzeugsitzvorrichtung mit wenigstens einer Elektronikeinheit und wenigstens einer Sitzgestelleinheit gemäß dem Anspruch 1 vorgeschlagen, wobei die Elektronikeinheit zumindest teilweise in einem von der Sitzgestelleinheit aufgespannten Hohlraum angeordnet ist. Ferner wird eine Flugzeugsitzvorrichtung mit wenigstens einer Elektronikeinheit, die wenigstens eine Versorgereinheit für zumindest zwei Komponenten aufweist, und mit wenigstens einer Sitzkomponente vorgeschlagen, wobei die Elektronikeinheit zumindest teilweise in einem von der Sitzkomponente aufgespannten Hohlraum angeordnet ist. Dadurch kann eine Lösung mit einer insgesamt besonders Platz sparenden Konstruktion durch eine vorteilhafte Nutzung eines bisher ungenutzten Hohlraums bereitgestellt werden.

Dabei soll unter einer "Sitzgestelleinheit" insbesondere eine Einheit verstanden werden, die dazu vorgesehen ist, eine Gewichtskraft wenigstens eines Sitzbodens und/oder wenigstens einer Rückenlehne und insbesondere einer auf den Sitzboden und/oder die Rückenlehne wirkenden Gewichtskraft auf einen Flugzeugboden zu übertragen. Unter "vorgesehen" soll stets speziell ausgestattet, ausgelegt und/oder programmiert verstanden werden. Insbesondere weist die Sitzgestelleinheit wenigstens ein Sitzbein, einen Sitzteiler, an dem eine Armlehne und/oder eine Rückenlehne befestigt ist, und/oder wenigstens einen Sitztragbalken auf, der insbesondere quer zu einer Sitzrichtung ausgerichtet ist und der insbesondere dazu vorgesehen ist, Gewichtskräfte des Sitzbodens und/oder der Rückenlehne an die Sitzbeine zu übertragen. Unter einem "Hohlraum" soll insbesondere ein Raum verstanden werden, der von dem den Hohlraum bildenden Bauteil zumindest von drei Seiten begrenzt wird. Das den Hohlraum bildende Bauteil kann hierfür einen konkaven Bereich, wie beispielsweise einen U-förmigen und/oder V-förmigen Bereich, aufweisen, und/oder weist vorzugsweise in wenigstens einer Ebene ein geschlossenes Profil auf, innerhalb dessen der Hohlraum angeordnet ist bzw. von dem der Hohlraum in wenigstens einer Ebene umgeben ist.

Der Hohlraum ist erfindungsgemäß innerhalb eines Bauteils der Sitzgestelleinheit angeordnet, und zwar in einem Sitztragbalken. Ist der Hohlraum zumindest teilweise von einem Sitztragbalken begrenzt, kann bei einer insgesamt besonders Platz sparenden Konstruktion ein vorteilhafter Hohlraum genutzt werden, und zwar insbesondere, wenn der Sitztragbalken von einem Sitzeinzeltragbalken gebildet ist. Unter einem "Sitzeinzeltragbalken" soll ein Sitztragbalken verstanden werden, der dazu vorgesehen ist, Torsionsmomente aufzunehmen, und dazu vorgesehen ist, als einziger Querbalken in einer Sitzreihe verwendet zu werden, über den die Gewichtskräfte von mehreren Sitzböden und/oder Rückenlehnen auf Sitzbeine übertragen werden.

Unter "Sitzkomponenten" sind sämtliche Komponenten eines Flugzeugsitzes zu verstehen, wie Sitzboden, Rückenlehne, Sitzumhausung, Komponenten einer Sitzgestelleinheit usw. Unter einer "Elektronikeinheit" soll insbesondere eine über eine reine Leitung und einen reinen Stecker hinausgehende Einheit verstanden werden, die wenigstens ein passives und/oder insbesondere wenigstens ein aktives Elektronikbauteil umfasst, das insbesondere zumindest teilweise zur Energieversorgung und/oder insbesondere zur Datenverarbeitung, zur Datenspeicherung, zur Steuerung und/oder zur Regelung vorgesehen ist. Unter einer "Versorgereinheit für zumindest zwei Komponenten" soll insbesondere eine Einheit verstanden werden, die dazu vorgesehen ist, Energie und/oder insbesondere Daten für zumindest zwei getrennte Komponenten, wie z.B. Monitore, PC-Versorgungseinheiten, Sitzaktuatoren, insbesondere von getrennten Sitzen, zu speichern, bereitzustellen und/oder zu verarbeiten. Insbesondere kann die Elektronikeinheit als Unterstützungseinheit einer weiteren Datenbox vorgesehen sein, um die weitere Datenbox möglichst klein und leicht ausführen zu können. Durch eine entsprechende Ausgestaltung können vorhandene, bisher ungenutzte Räume vorteilhaft genutzt sowie zusätzliche Bauteile, wie insbesondere zusätzliche Gehäuseelemente, Bauraum und Gewicht eingespart werden.

Weiterhin wird vorgeschlagen, dass die Sitzgestelleinheit eine Zugangseinheit aufweist, die dazu vorgesehen ist, in einem aufgeständerten Zustand der Sitzgestelleinheit einen Zugang zu dem Hohlraum in einer Richtung zu gewähren, die senkrecht zu einer Haupterstreckungsrichtung der Sitzgestelleinheit gerichtet ist. Unter einer "Haupterstreckungsrichtung" soll in diesem Zusammenhang insbesondere eine Richtung verstanden werden, die parallel zu einer Außenkontur der Sitzgestelleinheit verläuft und in der die Sitzgestelleinheit eine größte Abmessung aufweist. Dadurch kann trotz der Nutzung des bisher ungenutzten Bauraums eine Lösung mit einer einfachen Wartungs- und Reparaturmöglichkeit bereitgestellt werden.

Umfasst die Zugangseinheit eine Abdeckeinheit zu einer Abdeckung des Zugangs zu dem Hohlraum, kann eine hinter der Abdeckeinheit angeordnete Elektronikeinheit besonders gut vor Umwelteinflüssen und vor unerwünschter Manipulation durch unautorisierte Personen geschützt werden.

Weiterhin wird vorgeschlagen, dass die Abdeckeinheit ein Fixiermittel zur Fixierung einer Einbauposition der Elektronikeinheit aufweist. Bevorzugt ist die Fixiereinheit lösbar fest mit der Elektronikeinheit verbunden. Unter "lösbar fest verbunden" soll in diesem Zusammenhang insbesondere verstanden werden, dass eine räumliche Trennung von Fixiereinheit und Elektronikeinheit ohne jede Beschädigung derselben vorgesehen ist und die Trennung den Einsatz von Werkzeugen erfordert. Die Fixiereinheit kann alternativ dazu vorgesehen sein, zur Fixierung der Einbauposition der Elektronikeinheit mit dieser eine Formschlussverbindung zu bilden. Ferner kann in einer weiteren Ausführung die Fixiereinheit einstückig und insbesondere durch Stoffschluss mit zumindest einem Teil einer Gehäuseeinheit der Elektronikeinheit verbunden ausgebildet sein. Dadurch kann eine Abdeckung des Zugangs zu dem Hohlraum mit einer sicheren Befestigung der Elektronikeinheit zu einer besonders kompakten Lösung kombiniert werden.

Zudem wird vorgeschlagen, dass das Fixiermittel in einem Einbauzustand der Abdeckeinheit zumindest teilweise an eine Auβenkontur der Sitzgestelleinheit angepasst ist. Darunter soll in diesem Zusammenhang insbesondere verstanden werden, dass zumindest ein Teil eines äußeren Randbereichs des Fixiermittels im Wesentlichen parallel zu einer Anlagefläche des Fixiermittels an der Zugangseinheit verläuft. Dadurch kann eine besonders gute Wärmeankopplung des Fixiermittels an die Zugangseinheit der Sitzgestelleinheit ermöglicht und eine gute Ableitung von Verlustwärme der Elektronikeinheit erzielt werden.

Ist die Elektronikeinheit zumindest teilweise gehäusefrei ausgebildet, kann insbesondere zusätzliches Gewicht eingespart werden. Dabei soll unter "gehäusefrei" insbesondere verstanden werden, dass die Elektronikeinheit zumindest zwei passive und/oder insbesondere aktive Elektronikbauteile aufweist, die vorzugsweise zumindest teilweise zur Datenverarbeitung, zur Datenspeicherung und/oder Energieversorgung vorgesehen sind und nebeneinander ohne ein diese beiden Elektronikeinheiten gemeinsam umschließendes Gehäuse angeordnet sind.

In einer weiteren Ausgestaltung der Erfindung wird vorgeschlagen, dass die Flugzeugsitzvorrichtung wenigstens ein Einschubbefestigungselement aufweist, auf das die Elektronikeinheit im montierten Zustand aufgeschoben ist. Das Einschubbefestigungselement wird dabei vorzugsweise von einer Schiene gebildet, die vorteilhaft, im montierten Zustand betrachtet, in Längsrichtung des Hohlraums und insbesondere in Längsrichtung des Sitztragbalkens ausgerichtet ist. Durch eine entsprechende Ausgestaltung kann eine einfache Montage erreicht werden, und zwar insbesondere, indem das Einschubbefestigungselement zu einer Vormontage im Hohlraum vorgesehen ist, bevor die Elektronikeinheit auf das Einschubbefestigungselement aufgeschoben ist. Vorzugsweise weist das Einschubbefestigungselement eine Führungsrinne und/oder eine Führungserhebung auf, um die Elektronikeinheit beim Aufschieben zu führen und/oder insbesondere formschlüssig zu halten, wie insbesondere quer zur Längsrichtung und parallel zu einer Abstützfläche des Einschubbefestigungselements und/oder quer zur Längsrichtung und in eine von der Abstützfläche abgewandte Richtung.

Weist die Elektronikeinheit wenigstens eine in ihre Längsrichtung weisende Steckerplatte auf, kann eine einfache Kopplung bzw. Verkabelung der Elektronikeinheit mit vorgeschalteten und/oder nachgeschalteten Einheiten sichergestellt werden. Dabei soll unter einer "Steckerplatte" insbesondere eine Einheit mit zumindest zwei, vorzugsweise zumindest drei Steckanschlüssen verstanden werden, die vorzugsweise zumindest teilweise in einer Ebene angeordnet sind. Dabei soll unter einem "Steckanschluss" insbesondere ein männliches und/oder weibliches Steckmittel, wie ein Stift und/oder eine Buchse, verstanden werden.

Weist die Elektronikeinheit auf einer der Steckerplatte zugewandten Seite eine zur Steckerplatte in Längsrichtung beabstandete Befestigungsplatte auf, kann eine vorteilhafte Befestigung der Elektronikeinheit gewährleistet und ein vorteilhafter Freiraum zur einfachen Verkabelung der Elektronikeinheit erzielt werden. Unter "beabstandet" soll in diesem Zusammenhang insbesondere verstanden werden, dass die Befestigungsplatte und die Steckerplatte in Längsrichtung zumindest um 1 cm, vorzugsweise um mehrere Zentimeter beabstandet sind, so dass insbesondere ein Zwischenraum mit einer Länge in Längsrichtung von wenigstens 1 cm und vorzugsweise von mehreren Zentimetern entsteht.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
- Fig. 1: Einzelteile eines Flugzeugsitzes mit einer erfindungsgemäßen Flugzeugsitzvorrichtung schräg von oben,
- Fig. 2: die Einzelteile aus Figur 1 in einer Seitenansicht,
- Fig. 3: die Einzelteile in einer Frontansicht,
- Fig. 4: einen schematisiert dargestellten Schnitt entlang der Linie IV-IV in Figur 3,
- Fig. 5: eine Einzeldarstellung einer Elektronikeinheit der Flugzeugsitzvorrichtung schräg von unten,
- Fig. 6: eine Seitenansicht der Elektronikeinheit,
- Fig. 7: eine Rückansicht der Elektronikeinheit,
- Fig. 8: ein Einschubbefestigungselement der Flugzeugsitzvorrichtung schräg von unten,
- Fig. 9: eine schematisiert dargestellte alternative Elektronikeinheit,
- Fig. 10: einen Ausschnitt der Flugzeugsitzvorrichtung gemäß der Fig. 1 mit einer weiteren Ausführungsform eines Sitzeinzeltragbalkens und einer Elektronikeinheit in einem Einbauzustand in einer schematischen Ansicht von unten,
- Fig. 11: einen Ausschnitt der Flugzeugsitzvorrichtung gemäß der Fig. 1 mit einer weiteren Ausführungsform eines Sitzeinzeltragbalkens und einer Elektronikeinheit in einem Einbauzustand in einer schematischen Seitenansicht und
- Fig. 12: ein nicht erfindungsgemäßes Beispiel eines Sitzeinzeltragbalkens und einer Elektronikeinheit in einem Einbauzustand in einer Schnittdarstellung.

### Beschreibung der Ausführungsbeispiele

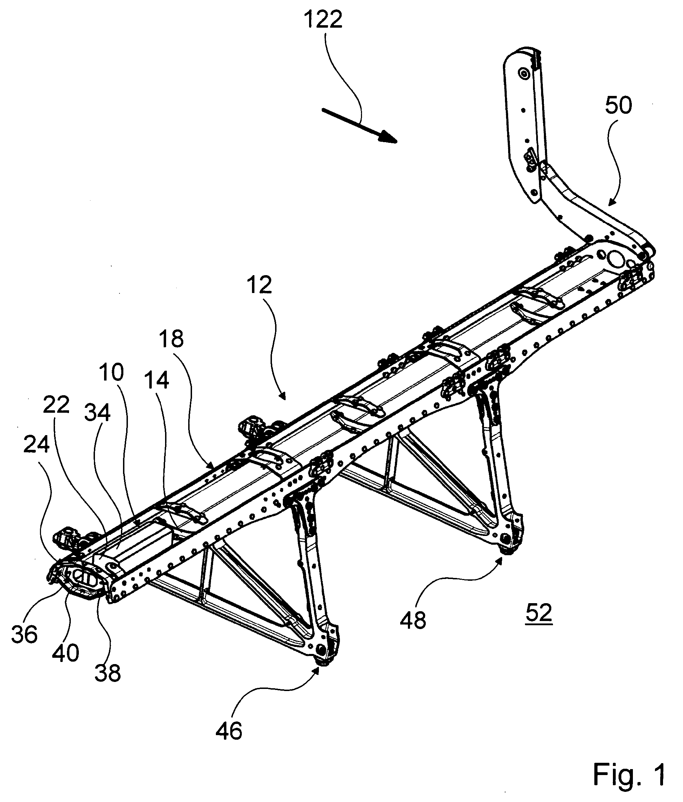

Figur 1 zeigt Einzelteile eines Flugzeugsitzes mit einer erfindungsgemäßen Flugzeugvorrichtung schräg von oben. Die Flugzeugsitzvorrichtung umfasst eine Elektronikeinheit 10 und eine von einer Sitzgestelleinheit 12 gebildete Sitzkomponente, wobei die Elektronikeinheit 10 in einem von der Sitzgestelleinheit 12 aufgespannten Hohlraum 14 angeordnet ist. Die Elektronikeinheit 10 weist eine Versorgereinheit 16 für mehrere Komponenten auf, und zwar insbesondere für mehrere, nicht näher dargestellte Monitoreinheiten und für mehrere, nicht näher dargestellte Sitzsteuereinheiten für mehrere Flugzeugsitze in einer Sitzreihe, die in bekannter Weise auf einem Flugzeugboden 52 aufgeständert ist. Die Elektronikeinheit 10 ist hierfür mit den mehreren Monitoreinheiten und den mehreren Sitzsteuereinheiten direkt und/oder auch indirekt, wie beispielsweise über einen HUB, der insbesondere dazu vorgesehen ist, Netzwerkknoten sternförmig zu verbinden, verbunden.

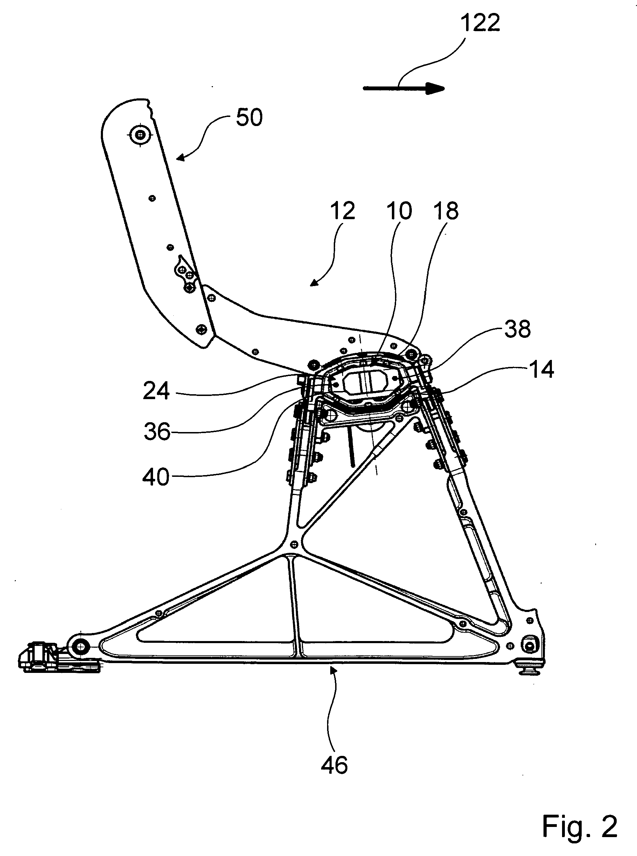

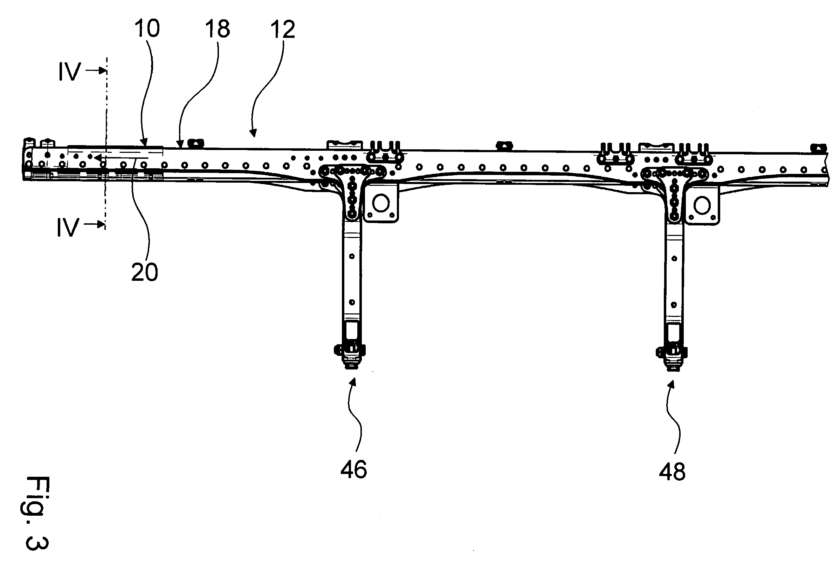

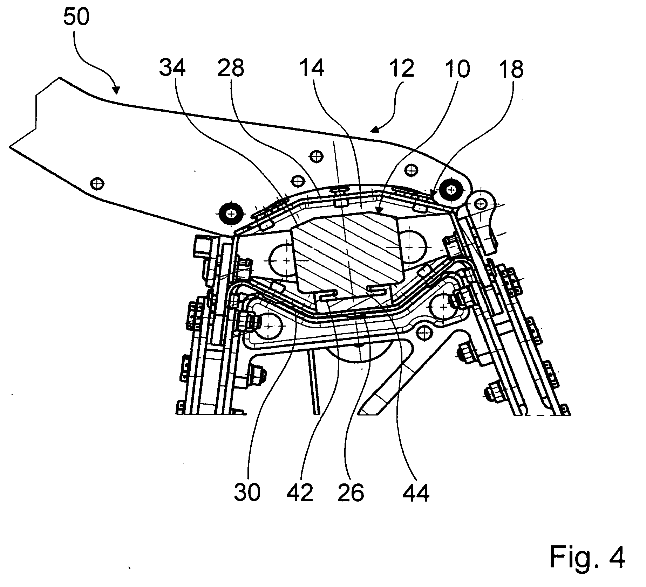

Der Hohlraum 14 ist von einem Sitztragbalken 18, und zwar von einem Sitzeinzeltragbalken, begrenzt und ist in einer Ebene quer zur Längsrichtung des Sitzeinzeltragbalkens von einem geschlossenen Profil des Sitzeinzeltragbalkens umgeben (Figuren 1 bis 4). Der Sitzeinzeltragbalken weist eine obere Schale 28 und eine untere Schale 30 auf (Figuren 2 und 4), die das geschlossene Profil bilden, wobei in den Figuren 1 und 3 die obere Schale 28 zur besseren Veranschaulichung der Elektronikeinheit 10 ausgeblendet ist. Der Sitztragbalken 18 ist aus Aluminium, wodurch eine vorteilhafte Wärmeabfuhr der Elektronikeinheit 10 sichergestellt werden kann. Der Sitztragbalken 18 ist mit Sitzbeinen 46, 48 und mit Sitzteilern 50 verbunden und quer zu einer Sitzrichtung 122 angeordnet. Am Sitztragbalken 18 sind mehrere, nicht näher dargestellte Sitzböden sowie Rückenlehnen von Flugzeugsitzen der Sitzreihe befestigt. Der Sitztragbalken 18 dient insbesondere zur Übertragung von auf die Sitzböden und die Rückenlehnen der Sitzreihe wirkenden Kräften auf die Sitzbeine 46, 48.

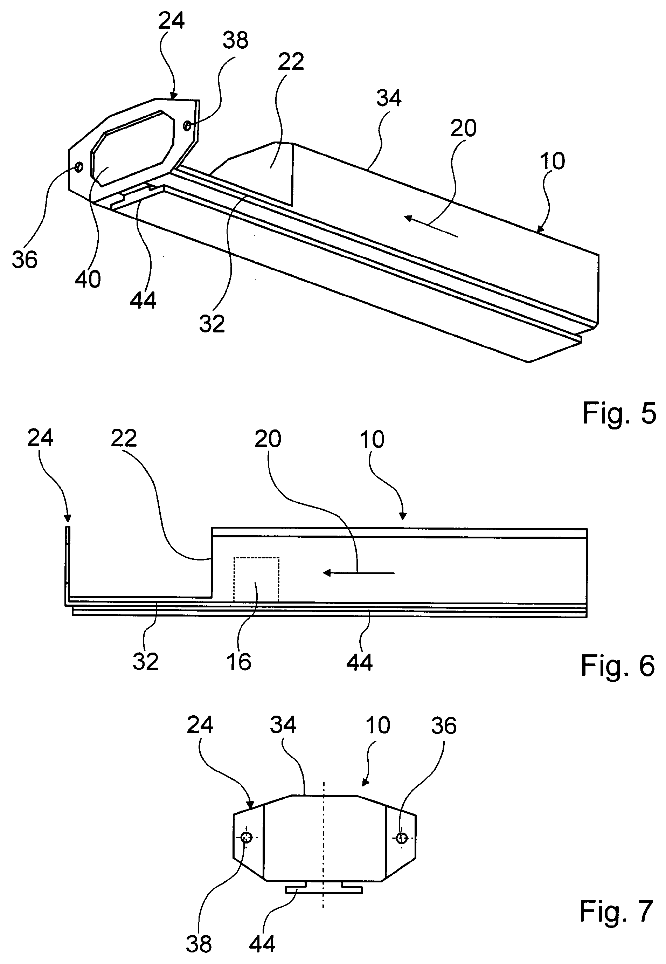

Die Elektronikeinheit 10 weist eine Trägerplatte 32 und eine auf der Trägerplatte 32 angeordnete, in ihre Längsrichtung 20 weisende, eine Gehäuseeinheit 34 der Elektronikeinheit 10a abschließende Steckerplatte 22 auf (Figuren 5 bis 7). Auf der Trägerplatte 32 sind die Elektronikbauteile der Elektronikeinheit 10 angeordnet. Die Trägerplatte 32 ist aus einem metallischen Werkstoff, und zwar aus Aluminium, wodurch eine besonders vorteilhafte Wärmeabfuhr erreicht wird. Die Steckerplatte 22 umfasst nicht näher dargestellte Stecker zur Verkabelung der Elektronikeinheit 10. Die Gehäuseeinheit 34 ist von ihrer Außenkontur an eine Innenkontur des Sitztragbalkens 18 angepasst. Dabei soll unter "angepasst" insbesondere verstanden werden, dass in wenigstens einer Ebene quer zur Längserstreckung des Sitztragbalkens 18 im Bereich der Gehäuseeinheit 34 eine Zwischenfläche zwischen der Außenkontur der Gehäuseeinheit 34 und der Innenkontur des Sitztragbalkens 18 existiert, die kleiner ist als 30%, vorzugsweise kleiner ist als 20% und besonders bevorzugt kleiner ist als 10% einer Gesamtfläche, die von der Innenkontur des Sitztragbalkens 18 in der betreffenden Ebene aufgespannt ist.

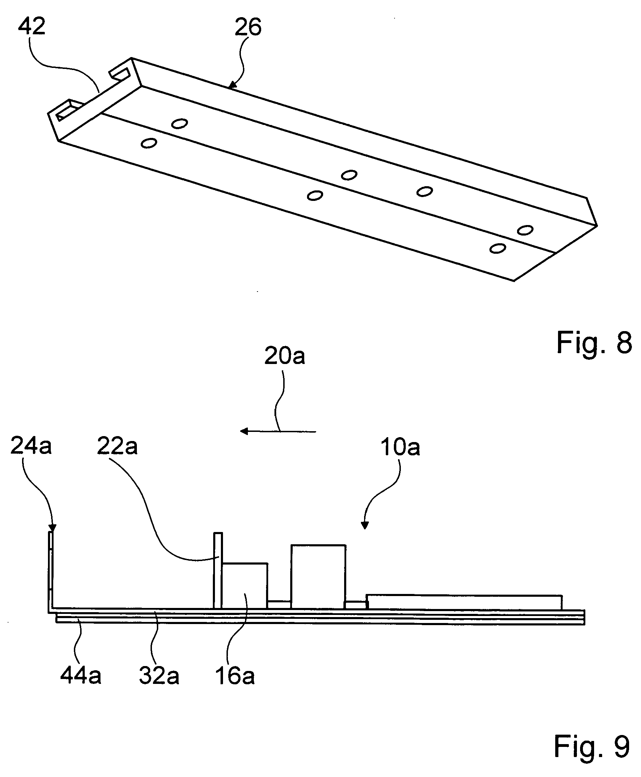

Anstatt einer Elektronikeinheit 10 mit einer Gehäuseeinheit 34 könnte auch eine Elektronikeinheit 10a vorgesehen sein, die zumindest teilweise gehäusefrei ausgebildet ist, wie dies schematisiert in Figur 9 dargestellt ist. Die Elektronikeinheit 10a weist mehrere Elektronikbauteile auf, die zur Datenverarbeitung und/oder Datenspeicherung vorgesehen sind und nebeneinander angeordnet sind, ohne ein diese umschließendes gemeinsames Gehäuse.

Die Elektronikeinheit 10 weist auf einer der Steckerplatte 22 zugewandten Seite eine zur Steckerplatte 22 in Längsrichtung 20 beabstandete Befestigungsplatte 24 auf. Die Befestigungsplatte 24 dient zur Befestigung an einer äußeren Rippe des Sitztragbalkens 18 und weist hierfür zwei Befestigungsausnehmungen 36, 38 auf. Ferner weist die Befestigungsplatte 24 eine im mittleren Bereich derselben angeordnete Ausnehmung 40 auf, die eine vorteilhafte Kabelführung von der Steckerplatte 22 aus dem Hohlraum 14 heraus ermöglicht. Mit der Steckerplatte 22 gekoppelte Kabel sind durch die Ausnehmung 40 an einer Stirnseite des Sitztragbalkens 18 aus dem Hohlraum 14 geführt. Außerhalb des Hohlraums 14 bzw. außerhalb des Sitztragbalkens 18 werden die Kabel vorteilhaft in an einer Unterseite des Sitztragbalkens 18 befestigte, nicht näher dargestellte Kabelkanäle weitergeführt. Durch einen sich zwischen der Steckerplatte 22 und der Befestigungsplatte 24 ergebenden Zwischenraum ist eine vorteilhafte Kontaktierung der Elektronikeinheit 10 sichergestellt.

Zur einfachen Montage der Elektronikeinheit 10 weist die Flugzeugsitzvorrichtung ein Einschubbefestigungselement 26 auf, auf das die Elektronikeinheit 10 im montierten Zustand aufgeschoben ist (Figuren 4 und 8). Das Einschubbefestigungselement 26 ist vorab ohne die Elektronikeinheit 10 in Längsrichtung des Sitztragbalkens 18 in denselben eingeschoben und darin befestigt, und zwar ist das Einschubbefestigungselement 26 mit der unteren Schale 30 des Sitztragbalkens 18 verschraubt. Das Einschubbefestigungselement 26 weist an seiner Deckseite eine Führungsrinne auf, die von einer im Querschnitt T-förmigen Längsnut 42 gebildet ist. Die Elektronikeinheit 10 weist an ihrer Unterseite einen T-förmigen Fuß 44 auf, mit dem die Elektronikeinheit 10 im montierten Zustand in die T-förmige Längsnut 42 des Einschubbefestigungselements 26 eingeschoben und formschlüssig, insbesondere quer zur Längserstreckung des Sitztragbalkens 18, fixiert ist.

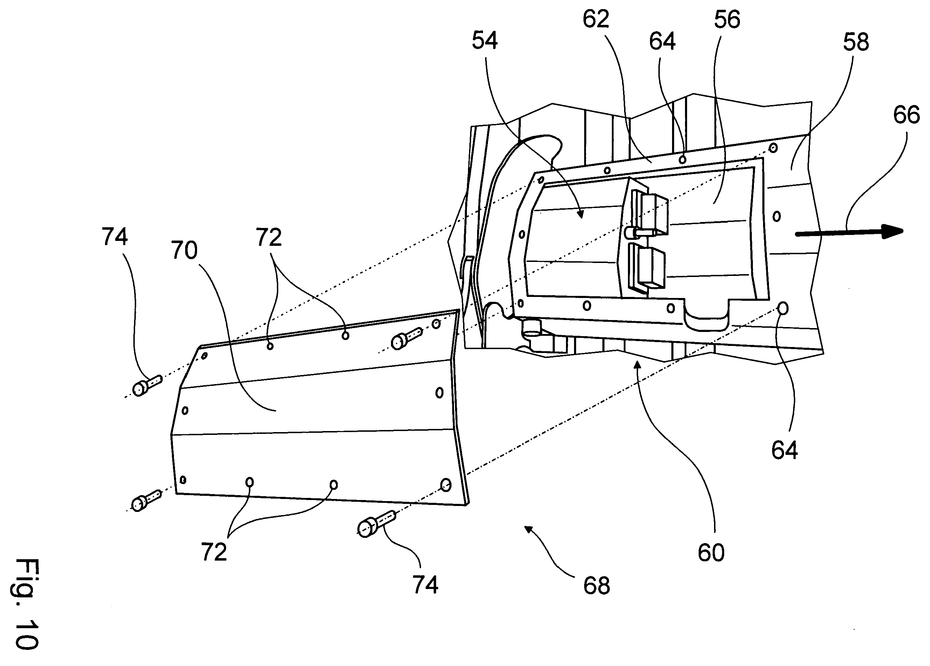

In Fig. 10 ist ein Ausschnitt der Flugzeugsitzvorrichtung gemäß der Fig. 1 mit einer weiteren Ausführungsform eines Sitzeinzeltragbalkens 58 und einer Elektronikeinheit 54 in einem Einbauzustand dargestellt. Die Elektronikeinheit 54 ist in einem von der Sitzgestelleinheit 12 aufgespannten Hohlraum 56 angeordnet. Der Sitzeinzeltragbalken 58 der Sitzgestelleinheit 12 weist im Gegensatz zu dem Ausführungsbeispiel der Fig. 1 an einer dem Flugzeugboden 52 zugewandten Unterseite eine Zugangseinheit 60 auf, die einen Randbereich 62 einer rechteckförmigen Aussparung des Sitzeinzeltragbalkens 58 und mehrere als Gewindeloch 64 ausgebildete Befestigungsmittel umfasst. Die Zugangseinheit 60 ist dazu vorgesehen, in einem aufgeständerten Zustand der Sitzgestelleinheit 12 einen Zugang zu dem Hohlraum 56 in einer Richtung zu gewähren, die senkrecht zu einer Haupterstreckungsrichtung 66 der Sitzgestelleinheit 12 gerichtet ist. Durch den Zugang kann die Elektronikeinheit 54 zur Installation und zu Wartungs- oder Reparaturarbeiten auf einfache Weise aus dem Hohlraum 56 entnommen werden.

Zum Zweck einer Abdeckung des Zugangs zu dem Hohlraum 56 weist die Zugangseinheit 60 weiterhin eine Abdeckeinheit 68 auf, die eine rechteckförmige Platte 70, deren Abmessungen größer sind als die der rechteckförmigen Aussparung und die mit kreisrunden Ausnehmungen 72 versehen ist, deren Positionen mit Positionen der Gewindelöcher 64 im Randbereich 62 der Aussparung des Sitzeinzeltragbalkens 58 korrespondieren, und weitere Befestigungsmittel in Form von Gewindeschrauben 74 umfasst. Die in einem Einbauzustand hinter der Abdeckeinheit 68 in dem von der Sitzgestelleinheit 12 aufgespannten Hohlraum 56 angeordnete Elektronikeinheit 54 ist damit vor Umwelteinflüssen und vor unerwünschter Manipulation durch unautorisierte Personen geschützt.

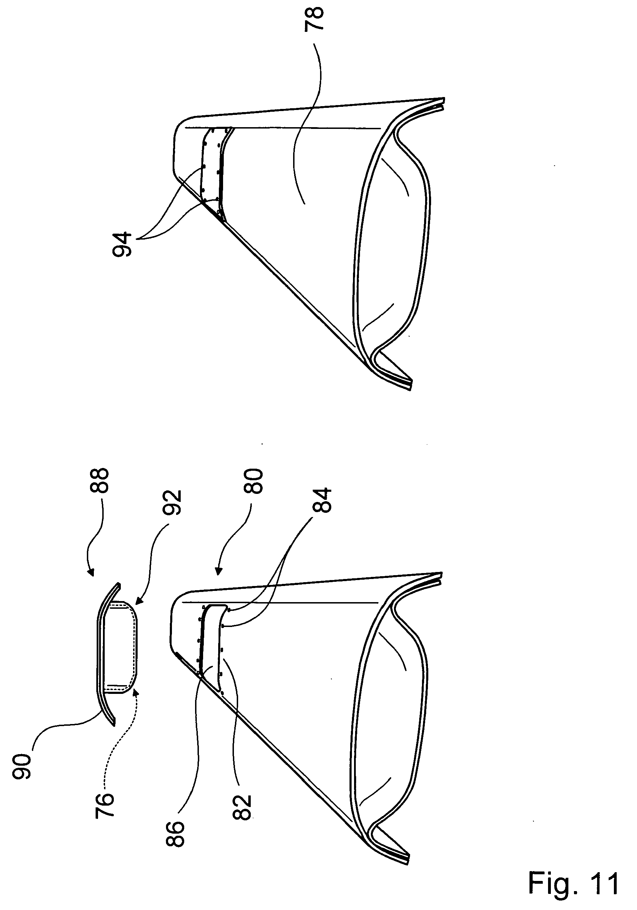

Fig. 11 zeigt einen Ausschnitt der Flugzeugsitzvorrichtung gemäß der Fig. 1 mit einem weiteren Ausführungsbeispiel eines Sitzeinzeltragbalkens 78 und einer Elektronikeinheit 76. Der Sitzeinzeltragbalken 78 der Sitzgestelleinheit 12 weist im Gegensatz zu den Ausführungsbeispielen der Figuren 1 und 10 an einer dem Flugzeugboden 52 abgewandten Oberseite eine Zugangseinheit 80 auf, die einen Randbereich 82 einer rechteckförmigen Aussparung des Sitzeinzeltragbalkens 78 und mehrere Befestigungsmittel umfasst, die von Gewindelöchern 84 gebildet werden. Die Zugangseinheit 80 ermöglicht einen Zugang zu einem von der Sitzgestelleinheit 12 aufgespannten Hohlraum 86 (linker Teil der Fig. 11).

Zum Zweck einer Abdeckung des Zugangs zu dem von der Sitzgestelleinheit 12 aufgespannten Hohlraum 86 und zu der in dem Hohlraum 86 angeordneten Elektronikeinheit 76 weist die Zugangseinheit 80 ferner eine Abdeckeinheit 88 auf. Die Abdeckeinheit 88 ist mit einem Fixiermittel 90 zur Fixierung einer Einbauposition der Elektronikeinheit 76 ausgestattet. Das als Flanschelement ausgebildete Fixiermittel 90 ist mittels einer durch Schweißen hergestellten Stoffschlussverbindung fest mit einer Gehäuseeinheit 92 der Elektronikeinheit 76 verbunden. Abmessungen der rechteckförmigen Aussparung des Sitzeinzeltragbalkens 78 und der Gehäuseeinheit 92 der Elektronikeinheit 76 sind derart ausgelegt, dass die Elektronikeinheit 76 durch die rechteckförmige Aussparung in den von der Sitzgestelleinheit 12 aufgespannten Hohlraum 86 einsetzbar ist.

Das Flanschelement, dessen Abmessungen größer sind als die der rechteckförmigen Aussparung und das mit kreisförmigen Ausnehmungen versehen ist, deren Positionen mit Positionen der Gewindelöcher 84 im Randbereich 82 der Aussparung des Sitzeinzeltragbalkens 78 korrespondieren, kann mittels weiterer Befestigungsmittel in Form von Gewindeschrauben 94 an dem Sitzeinzeltragbalken 78 befestigt werden, wodurch die Einbauposition der Elektronikeinheit 76 fixiert ist. Der rechte Teil der Fig. 11 zeigt die Elektronikeinheit 76 im Einbauzustand.

Das Flanschelement weist eine äußere Form auf, die an Außenkonturen des Sitzeinzeltragbalkens 78 der Sitzgestelleinheit 12 angepasst ist, die zum einen durch einen Schnitt mit einer Schnittebene, die in der Sitzrichtung 122 und senkrecht zum Flugzeugboden 52 ausgerichtet ist, und zum anderen durch einen Schnitt mit einer Schnittebene, die senkrecht zur Sitzrichtung 122 ausgerichtet ist, entstehen. Dadurch ist das Flanschelement im Einbauzustand der Elektronikeinheit 76 in vollständiger Umfangslänge in Anlage mit dem Sitzeinzeltragbalken 78 der Sitzgestelleinheit 12, so dass eine gute Ableitung einer durch einen Betrieb der Elektronikeinheit 76 von dieser erzeugten Abwärme in die Sitzgestelleinheit 12 gewährleistet ist.

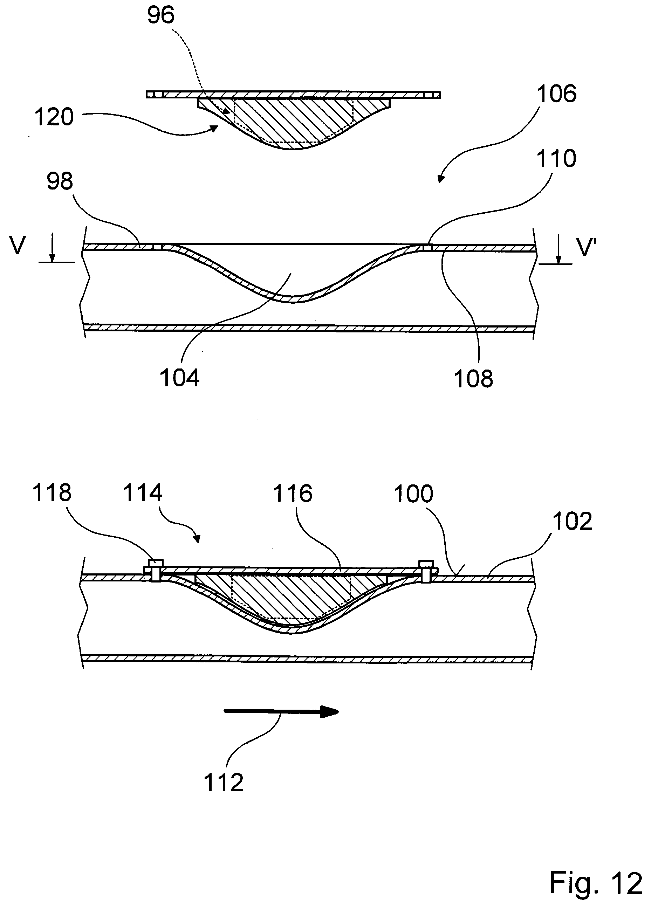

In Fig. 12 ist ein nicht erfindungsgemäßes Beispiel eines Sitzeinzeltragbalkens 98 und einer Elektronikeinheit 96 schematisch dargestellt. Der Sitzeinzeltragbalken 98 der Sitzgestelleinheit 12 weist im Gegensatz zu den Ausführungsbeispielen der Figuren 1, 10 und 11 an einer Außenseite 100 einer Außenwand 102, nämlich einer dem Flugzeugboden 52 abgewandten Oberseite, einen konkaven Bereich auf, mittels dessen der Sitzeinzeltragbalken 98 der Sitzgestelleinheit 12 einen Hohlraum 104 bildet, der von der Außenseite 100 der Außenwand 102 von drei Seiten begrenzt ist. In einer parallel zum Flugzeugboden 52 ausgerichteten Schnittebene in einer durch die Linie V-V' angedeuteten Höhe weist der als konkaver Bereich ausgebildete Hohlraum 104 ein geschlossenes Profil in Kreisform auf.

Der Sitzeinzeltragbalken 98 der Sitzgestelleinheit 12 weist eine Zugangseinheit 106 auf, die einen kreisringförmigen Randbereich 108 des konkaven Bereichs des Sitzeinzeltragbalkens 98 und mehrere Befestigungsmittel umfasst, die von Gewindelöchern 110 gebildet werden. Die Zugangseinheit 106 ist dazu vorgesehen, in einem aufgeständerten Zustand der Sitzgestelleinheit 12 einen Zugang zu dem von dem konkaven Bereich gebildeten Hohlraum 104 in einer Richtung zu gewähren, die senkrecht zu einer Haupterstreckungsrichtung 112 der Sitzgestelleinheit 12 gerichtet ist. Durch den Zugang kann die Elektronikeinheit 96 zur Installation und zu Wartungs- oder Reparaturarbeiten auf einfache Weise aus dem Hohlraum 104 entnommen werden.

Zum Zweck einer Abdeckung des Zugangs zu dem Hohlraum 104 weist die Zugangseinheit 106 weiterhin eine Abdeckeinheit 114 auf, die eine kreisförmige Platte 116, deren Durchmesser gröβer ist als der des konkaven Bereichs und die mit kreisförmigen Ausnehmungen versehen ist, deren Positionen mit Positionen der Gewindelöcher 110 im kreisringförmigen Randbereich 108 des konkaven Bereichs des Sitzeinzeltragbalkens 98 korrespondieren, und weitere Befestigungsmittel in Form von Gewindeschrauben 118 umfasst. Die kreisförmige Platte 116 der Abdeckeinheit 114 ist lösbar fest mit einer Gehäuseeinheit 120 der Elektronikeinheit 96 verbunden und ist von dieser zerstörungsfrei mit Werkzeugen trennbar. Die Platte 116 der Abdeckeinheit 114 bildet somit gleichzeitig ein Fixiermittel zur Fixierung einer Einbauposition der Elektronikeinheit 96. Die Elektronikeinheit 96 ist in ihren äußeren Abmessungen an den konkaven Bereich des Sitzeinzeltragbalkens 98 angepasst. Die kreisförmige Platte 116 der Abdeckeinheit 114 ist in ihrem Randbereich und in einem zentralen Bereich an eine Kontur des Sitzeinzeltragbalkens 98 angepasst. Dadurch ist die Abdeckeinheit 114 im Einbauzustand der Elektronikeinheit 96 in einer vollständiger Umfangslänge in Anlage mit dem Sitzeinzeltragbalken 98 der Sitzgestelleinheit 12, so dass eine gute Ableitung einer durch einen Betrieb der Elektronikeinheit 96 von dieser erzeugten Abwärme in die Sitzgestelleinheit 12 gewährleistet ist. Weiterhin bildet die Abdeckeinheit 114 mit dem Sitzeinzeltragbalken 98 der Sitzgestelleinheit 12 in einem Einbauzustand der Elektronikeinheit 96 eine im Wesentlichen glatte Kontur, so dass die Abdeckeinheit 114 als Fortsetzung der Außenseite 100 der Außenwand 102 des Sitzeinzeltragbalkens 98 außerhalb des konkaven Bereichs angesehen werden kann. Hinter der Abdeckeinheit 114 ist die im von der Sitzgestelleinheit 12 aufgespannten Hohlraum 104 angeordnete Elektronikeinheit 96 vor Umwelteinflüssen und vor unerwünschter Manipulation durch unautorisierte Personen geschützt.

**Bezugszeichen**

| | | | |
|---|---|---|---|
| 10 | Elektronikeinheit | 60 | Zugangseinheit |
| 12 | Sitzgestelleinheit | 62 | Randbereich |
| 14 | Hohlraum | 64 | Gewindeloch |
| 16 | Versorgereinheit | 66 | Haupterstreckungsrich-tung |
| 18 | Sitztragbalken | | |
| 20 | Längsrichtung | 68 | Abdeckeinheit |
| 22 | Steckerplatte | 70 | Platte |
| 24 | Befestigungsplatte | 72 | Ausnehmung |
| 26 | Einschubbefestigungselement | 74 | Gewindeschraube |
| | | 76 | Elektronikeinheit |
| 28 | Schale | 78 | Sitzeinzeltragbalken |
| 30 | Schale | 80 | Zugangseinheit |
| 32 | Trägerplatte | 82 | Randbereich |
| 34 | Gehäuseeinheit | 84 | Gewindeloch |
| 36 | Befestigungsausnehmung | 86 | Hohlraum |
| 38 | Befestigungsausnehmung | 88 | Abdeckeinheit |
| 40 | Ausnehmung | 90 | Fixiermittel |
| 42 | Längsnut | 92 | Gehäuseeinheit |
| 44 | Fuß | 94 | Gewindeschraube |
| 46 | Sitzbein | 96 | Elektronikeinheit |
| 48 | Sitzbein | 98 | Sitzeinzeltragbalken |
| 50 | Sitzteiler | 100 | Außenseite |
| 52 | Flugzeugboden | 102 | Außenwand |
| 54 | Elektronikeinheit | 104 | Hohlraum |
| 56 | Hohlraum | 106 | Zugangseinheit |
| 58 | Sitzeinzeltragbalken | 108 | Randbereich |
| 110 | Gewindeloch | | |
| 112 | Haupterstreckungsrichtung | | |
| 114 | Abdeckeinheit | | |
| 116 | Platte | | |
| 118 | Gewindeschraube | | |
| 120 | Gehäuseeinheit | | |
| 122 | Sitzrichtung | | |

## Patentansprüche

1. Flugzeugsitzvorrichtung für eine Sitzreihe mit wenigstens einer Elektronikeinheit (10; 10a; 54; 76) und wenigstens einer Sitzgestelleinheit (12), die einen Sitzeinzeltragbalken (18; 58; 78) aufweist, der dazu vorgesehen ist, Torsionsmomente aufzunehmen und als einziger Querbalken in der Sitzreihe verwendet zu werden, wobei die Elektronikeinheit (10; 10a; 54_{;} 76) zumindest teilweise in einem von der Sitzgestelleinheit (12) aufgespannten Hohlraum (14; 56; 86) angeordnet ist, wobei der Hohlraum (14; 56; 86) innerhalb des Sitzeinzeltragbalkens (18; 58; 78) angeordnet und zumindest teilweise von dem Sitzeinzeltragbalken (18; 58; 78) begrenzt ist, **dadurch gekennzeichnet, dass** die Sitzgestelleinheit (12) eine Zugangseinheit (60; 80) aufweist, die dazu vorgesehen ist, in einem aufgeständerten Zustand der Sitzgestelleinheit (12) einen Zugang zu dem Hohlraum (14; 56; 86) in einer Richtung zu gewähren, die senkrecht zu einer Haupterstreckungsrichtung (66) der Sitzgestelleinheit (12) gerichtet ist, und eine Abdeckeinheit (68; 88) zu einer Abdeckung des Zugangs zu dem Hohlraum (14; 56; 86) umfasst, wobei die Abdeckeinheit (68; 88) ein Fixiermittel (90) zur Fixierung einer Einbauposition der Elektronikeinheit (10; 10a; 54; 76) aufweist und als Flanschelement ausgebildet ist.

2. Flugzeugsitzvorrichtung nach Anspruch 1, **dadurch gekennzeichnet, dass** die Elektronikeinheit (10; 10a; 54; 76) wenigstens eine Versorgereinheit (16; 16a) für zumindest zwei Komponenten aufweist.

3. Flugzeugsitzvorrichtung nach Anspruch 1 oder 2,
**dadurch gekennzeichnet, dass**
das Fixiermittel (90) lösbar fest mit der Elektronikeinheit (10; 10a; 54; 76) verbunden ist.

4. Flugzeugsitzvorrichtung zumindest nach einem der vorhergehenden Ansprüche,
**dadurch gekennzeichnet, dass** das Fixiermittel (90) einstückig, durch Stoffschluss mit zumindest einem Teil einer Gehäuseeinheit (34) der Elektronikeinheit (10; 10a; 54; 76) verbunden, ausgebildet ist.

5. Flugzeugsitzvorrichtung zumindest nach einem der vorhergehenden Ansprüche,
**dadurch gekennzeichnet, dass**
das Fixiermittel (90) in einem Einbauzustand der Abdeckeinheit (68; 88) zumindest teilweise an eine Außenkontur der Sitzgestelleinheit (12) angepasst ist.

6. Flugzeugsitzvorrichtung nach Anspruch 1 oder 2,
**dadurch gekennzeichnet,**
**dass** der Hohlraum (14; 56; 86) in wenigstens einer Ebene von einem geschlossenen Profil des Sitzeinzeltragbalkens (18; 58; 78) umgeben ist.

7. Flugzeugsitzvorrichtung nach einem der vorhergehenden Ansprüche,
**dadurch gekennzeichnet,**
**dass** die Elektronikeinheit (10a) zumindest teilweise gehäusefrei ausgebildet ist.

8. Flugzeugsitzvorrichtung nach einem der vorhergehenden Ansprüche,
**gekennzeichnet durch**
wenigstens ein Einschubbefestigungselement (26), auf das die Elektronikeinheit (10; 10a; 54; 76) im montierten Zustand aufgeschoben ist.

9. Flugzeugsitzvorrichtung nach einem der vorhergehenden Ansprüche,
**dadurch gekennzeichnet,**
**dass** die Elektronikeinheit (10; 10a; 54; 76) wenigstens eine in ihre Längsrichtung (20; 20a) weisende Steckerplatte (22; 22a) aufweist.

10. Flugzeugsitzvorrichtung nach Anspruch 9,
**dadurch gekennzeichnet,**
**dass** die Elektronikeinheit (10; 10a; 54; 76) auf einer der Steckerplatte (22; 22a) zugewandten Seite eine zur Steckerplatte (22; 22a) in Längsrichtung (20; 20a) beabstandete Befestigungsplatte (24; 24a) aufweist.

11. Flugzeugsitz mit einer Flugzeugsitzvorrichtung nach ei der Ansprüche 1 bis 10.

## Claims

1. Aircraft seat device for a seat row, with at least one electronics unit (10; 10a; 54; 76) and at least one seat frame unit (12) comprising a single seat support beam (18; 58; 78) which is provided for receiving torsional moments and for being used as an only cross beam in the seat row, wherein the electronics unit (10; 10a; 54; 76) is arranged at least partly in a hollow space (14; 56; 86) formed by the seat frame unit (12), the hollow space (14; 56; 86) being arranged inside the single seat support beam (18; 58; 78) and limited at least partly by the single seat support beam (18; 58; 78),
**characterised in that**
the seat frame unit (12) comprises an access unit (60; 80), which is provided, in a mounted state of the seat frame unit (12), for allowing an access to the hollow space (14; 56; 86) in a direction that is oriented perpendicularly to a main extension direction (66) of the seat frame unit (12), and comprises a cover unit (68; 88) for covering the access to the hollow space (14; 56; 86), wherein the cover unit (68; 88) comprises a fixing means (90) for fixing an installation position of the electronics unit (10; 10a; 54; 76) and is embodied as a flange element.

2. Aircraft seat device according to claim 1,
**characterised in that**
the electronics unit (10; 10a; 54; 76) comprises at least one supply unit (16; 16a) for at least two components.

3. Aircraft seat device according to claim 1 or 2,
**characterised in that**
the fixing means (90) is connected to the electronics unit (10; 10a; 54; 76) securely and detachably.

4. Aircraft seat device according at least to one of the preceding claims,
**characterised in that**
the fixing means (90) is embodied in such a way that it is connected at least to a portion of a housing unit (34) of the electronics unit (10; 10a; 54; 76) in a one-part implementation by substance-to-substance bond.

5. Aircraft seat device according at least to one of the preceding claims, **characterised in that**
the fixing means (90) is adapted at least partly to an outer contour of the seat frame unit (12) in an installation state of the cover unit (68; 88).

6. Aircraft seat device according to claim 1 or 2,
**characterised in that**
the hollow space (14; 56; 86) is in at least one plane surrounded by a closed profile of the single seat support beam (18; 58; 78).

7. Aircraft seat device according to one of the preceding claims,
**characterised in that**
the electronics unit (10a) is embodied at least partly without a housing.

8. Aircraft seat device according to one of the preceding claims,
**characterised by**
at least one slide-in fastening element (26) onto which the electronics unit (10; 10a; 54; 76) is slid in the mounted state.

9. Aircraft seat device according to one of the preceding claims,
**characterised in that**
the electronics unit (10; 10a; 54; 76) comprises at least one plug plate (22; 22a) oriented in its longitudinal direction (20; 20a).

10. Aircraft seat device according claim 9,
**characterised in that**
the electronics unit (10a) comprises, on a side facing the plug plate (22; 22a), a fastening plate (24; 24a) that is spaced apart from the plug plate (22; 22a) in the longitudinal direction (20; 20a).

11. Aircraft seat with an aircraft seat device according to one of claims 1 to 10.

## Revendications

1. Dispositif siège d'avion pour une rangée de sièges, avec au moins une unité électronique (10 ;10a ; 54 ; 76) et au moins une unité de châssis de siège (12) comportant une singulière poutre support de siège (18 ; 58 ; 78), laquelle est prévue à recevoir des moments de torsion et à être usée comme la seule poutre transverse dans la rangée de sièges, l'unité électronique (10 ;10a ; 54 ; 76) étant disposée au moins partiellement dans une cavité (14 ; 56 ; 86) formée par l'unité de châssis de siège (12), la cavité (14 ; 56 ; 86) étant disposée dans la singulière poutre support de siège (18 ; 58 ; 78) et limitée au moins partiellement par la singulière poutre support de siège (18 ; 58 ; 78),
**caractérisé en ce que**
l'unité de châssis de siège (12) comporte une unité d'accès (60 ; 80), laquelle est prévue pour accorder, dans un état monté de l'unité de châssis de siège (12), un accès à la cavité (14 ; 56 ; 86) dans une direction orientée perpendiculairement à une direction d'extension principale (66) de l'unité de châssis de siège (12), et comporte une unité de couverture (68 ; 88) pour couvrir l'accès à la cavité (14 ; 56 ; 86), l'unité de couverture (68 ; 88) comprenant un moyen de fixation pour fixer une position d'installation de l'unité électronique (10 ;10a ; 54 ; 76) et étant implémentée comme élément de flasque.

2. Dispositif siège d'avion selon la revendication 1,
**caractérisé en ce que**
l'unité électronique (10 ; 10a ; 54 ; 76) comporte au moins une unité de fourniture (16 ; 16a) pour au moins deux composants.

3. Dispositif siège d'avion selon la revendication 1 ou 2,
**caractérisé en ce que**
le moyen de fixation (90) est connecté à l'unité électronique (10 ; 10a ; 54 ; 76) de manière fixement et amoviblement.

4. Dispositif siège d'avion au moins selon une des revendications précédentes,
**caractérisé en ce que**
le moyen de fixation (90) est implémenté de telle façon qu'il est connecté au moins à une portion d'une unité de boîtier (34) de l'unité électronique (10 ; 10a ; 54 ; 76) intégralement par liaison substance-substance.

5. Dispositif siège d'avion au moins selon une des revendications précédentes,
**caractérisé en ce que**
le moyen de fixation (90) est au moins partiellement adapté à un contour extérieur de l'unité de châssis de siège (12) dans un état installé de l'unité de couverture (68 ; 88).

6. Dispositif siège d'avion selon la revendication 1 ou 2,
**caractérisé en ce que**
la cavité (14 ; 56 ; 86) est entourée dans au moins un plan par un profil fermé de la singulière poutre support de siège (18 ; 58 ; 78).

7. Dispositif siège d'avion selon une des revendications précédentes,
**caractérisé en ce que**
l'unité électronique (10a) est implémentée au moins partiellement sans boîtier.

8. Dispositif siège d'avion selon une des revendications précédentes,
**caractérisé par**
au moins un élément tiroir de fixation (26), sur lequel l'unité électronique (10 ; 10a ; 54 ; 76) est glissée dans l'état monté.

9. Dispositif siège d'avion selon une des revendications précédentes,
**caractérisé en ce que**
l'unité électronique (10 ; 10a ; 54 ; 76) comporte au moins un tableau de fiche (22 ; 22a) orienté vers la direction longitudinale (20 ; 20a) de celle-ci.

10. Dispositif siège d'avion selon la revendication 9,
**caractérisé en ce que**
l'unité électronique (10 ; 10a ; 54 ; 76) comporte, sur un côté faisant face au tableau de fiche (22 ; 22a), une plaque de fixation (24 ; 24a) laquelle est distante au tableau de fiche (22 ; 22a) dans la direction longitudinale (20 ; 20a).

11. Siége d'avion avec un dispositif siège d'avion selon une des revendications 1 à 10.
